# EUROPÄISCHE PATENTSCHRIFT

(11) **EP 2 892 765 B1**
(45) Veröffentlichungstag und Bekanntmachung des Hinweises auf die Patenterteilung: **26.07.2017**
(21) Anmeldenummer: 13755985.2
(22) Anmeldetag: 19.08.2013
(51) Int. Cl.: B60R 21/36

(54) **SICHERHEITSVORRICHTUNG FÜR EIN KRAFTFAHRZEUG**
SAFETY DEVICE FOR A MOTOR VEHICLE
DISPOSITIF DE SÉCURITÉ POUR VÉHCIULE AUTOMOBILE

(30) Priorität: 03.09.2012 DE 102012215579; 26.03.2013 DE 102013205283
(43) Veröffentlichungstag der Anmeldung: 15.07.2015
(73) Patentinhaber: Bayerische Motoren Werke Aktiengesellschaft, 80809 München (DE)
(72) Erfinder: KOESTLER, Ulrich, 85241 Hebertshausen (DE); IVENZ, Udo, 86456 Gablingen (DE); SPRINGSKLEE, Markus, 80638 Muenchen (DE); MEIERHOFER, Walter, 94099 Schmidham (DE); RUDOLPH, Tim, 81543 München (DE)
(86) Internationale Anmeldenummer: PCT/EP2013/067235
(87) Internationale Veröffentlichungsnummer: WO 2014/033000

(56) Entgegenhaltungen:
- EP-A2- 1 681 212
- DE-A1- 10 254 589

## Beschreibung

Die vorliegende Erfindung betrifft eine Sicherheitsvorrichtung für ein Kraftfahrzeug mit einem aufblasbaren Airbag, der derart angepasst ist, dass er sich in einem aufgeblasenen Zustand zum Schutz einer aufprallenden Person über zumindest einen unteren Teil einer Außenseite einer Frontscheibe des Kraftfahrzeugs erstreckt.

Eine bekannte Frontscheibenairbagvorrichtung für ein Kraftfahrzeug ist derart ausgebildet, dass im Falle einer Kollision oder einer bevorstehenden Kollision mit einem Fußgänger eine Frontklappe zumindest an deren hinteren Ende angehoben wird und ein Fußgängerschutzairbag, der unter der Frontklappe angeordnet ist, aufgeblasen wird. Insbesondere wird der Frontscheibenairbag nach dem Anheben der Frontklappe mittels eines Gasgenerators aufgeblasen, so dass sich der Frontscheibenairbag aus einem Spalt zwischen der Frontklappe und einem Windlauf heraus entfaltet und sich anschließend im vollständig aufgeblasenen Zustand über eine gesamte Breite der Frontscheibe sowie eine linke und eine rechte A-Säule erstreckt.

Es ist die Aufgabe der vorliegenden Erfindung, eine Sicherheitsvorrichtung für ein Kraftfahrzeug mit einem aufblasbaren Airbag, der derart angepasst ist, dass er sich im aufgeblasenen Zustand zum Schutz einer aufprallenden Person über eine Außenseite einer Karosserie erstreckt, zu schaffen, wobei die Sicherheitsvorrichtung ein Aufblasen des Airbags zu einem möglichst späten Zeitpunkt starten kann. Dokument DE10254589 offenbart eine Sicherheitsvorrichtung gemäß dem Oberbegriff des Anspruchs 1. Diese Aufgabe wird insbesondere durch eine Sicherheitsvorrichtung für ein Kraftfahrzeug mit einem aufblasbaren Airbag mit den Merkmalen von Patentanspruch 1 gelöst. Weiterbildungen der vorliegenden Erfindung sind in den abhängigen Patentansprüchen ausgeführt.

Gemäß einem ersten Aspekt der vorliegenden Erfindung hat eine Sicherheitsvorrichtung für ein Kraftfahrzeug einen aufblasbaren Airbag, der derart angepasst ist, dass er sich im aufgeblasenen Zustand zum Schutz einer aufprallenden Person, insbesondere eines Fußgängers oder eines Fahrradfahrers, über zumindest einen unteren Teil einer Außenseite einer Frontscheibe des Kraftfahrzeugs und insbesondere zusätzlich über eine linke A-Säule und eine rechte A-Säule des Kraftfahrzeugs erstreckt. Ferner hat die Sicherheitsvorrichtung einen Gasgenerator zum Aufblasen des Airbags. Der Airbag gemäß der vorliegenden Erfindung weist eine erste Kammer und einen zweite Kammer auf. Die erste Kammer ist dabei im aufgeblasenen Zustand des Airbags benachbart zu einem unteren Ende der Frontscheibe, d.h. insbesondere benachbart zu einem hinteren Ende einer Frontklappe bzw. einem Windlauf, angeordnet. Die zweite Kammer ist im aufgeblasenen Zustand entfernt von dem unteren Ende der Frontscheibe, d.h. insbesondere entfernt von dem hinteren Ende der Frontklappe bzw. dem Windlauf, angeordnet. Insbesondere kann die zweite Kammer dabei angrenzend an die erste Kammer ausgebildet sein. Des Weiteren erstrecken sich die erste Kammer und die zweite Kammer über eine gesamte Breite der Frontscheibe. Bei dem Aufblasen des Airbags ist die erste Kammer zu einem früheren Zeitpunkt als die zweite Kammer vollständig befüllbar.

Durch die erfindungsgemäße Anordnung der ersten Kammer und der zweiten Kammer trifft eine verhältnismäßig kleine Person bei einer frontalen Kollision mit dem Kraftfahrzeug tendenziell und selbstverständlich abhängig von der Fahrzeuggeschwindigkeit eher auf die erste Kammer, die gemäß der erfindungsgemäßen Anordnung an dem Kraftfahrzeug in eine Fahrzeughauptfahrtrichtung weiter vorne und weiter unten angeordnet ist, wenn man davon ausgeht, dass eine Frontschreibe schräg nach oben und hinten verläuft.

Die verhältnismäßig große Person trifft dagegen eher auf die zweite Kammer, die in die Fahrzeughauptfahrtrichtung weiter hinten und weiter oben angeordnet ist. Dabei ist davon auszugehen, dass die große Person durch den höheren Auftreffpunkt auch später auftreffen würde. Dies trifft insbesondere bei einer frontalen Kollision des Kraftfahrzeugs mit einer Person zu, bei der die Person von einem vorderen Stoßfänger des Kraftfahrzeugs erfasst wird und die Person dann über die Frontklappe auf die Frontscheibe treffen kann. Durch das frühere Aufblasen der ersten Kammer, kann dem früheren Auftreffen einer kleinen Person begegnet werden, wobei die zweite Kammer später aufgeblasen wird, so dass eine größere Person erst zu einem späteren Zeitpunkt oder einem späteren Zeitintervall auf die zweite Kammer treffen würde. Insgesamt kann dabei ein Aufblasen des Airbags, also eine Aktivierung eines Gasgenerators, zu einem späteren Zeitpunkt beginnen, da zu dem früherem Zeitpunkt bzw. in einem früheren Zeitintervall, zu dem das Auftreffen einer kleinen Person erwartet wird, nicht der gesamte Airbag aufgeblasen sein muss, sondern lediglich die ersten Kammer. Ein späteres Starten des Gasgenerators bringt dabei den Vorteil, dass mehr Zeit zum Vorbereiten der Auslösung des Airbags bleibt. Dies ist insbesondere im Falle eines erforderlichen Hochhebens der Frontklappe vorteilhaft, da das Hochheben der Frontklappe Zeit erfordert. Ferner steht für eine Steuerungseinrichtung mehr Zeit zum Erfassen der Kollisionssituation zur Verfügung womit spezifischer auf die Kollisionssituation reagiert werden kann oder eine Fehlauslösung bzw. Sicherheitsauslösung des Airbags - also eine Auslösung, obwohl tatsächlich keine Kollision mit einer Person stattfindet bzw. stattgefunden hat - besser verhindert werden kann.

Durch die besondere Anordnung der ersten Kammer und der zweiten Kammer und dem unterschiedlichen Kollisionsverhalten von unterschiedlich großen Personen, beispielsweise einer kleinen Person und einer großen Person, bei einer Kollision kann dabei die erste Kammer insbesondere für den Aufprall der kleineren Person ausgelegt sein und die zweite Kammer insbesondere für den Aufprall der größeren Person ausgelegt sein.

Gemäß einem zweiten Aspekt der vorliegenden Erfindung wird die vorstehende Aufgabe durch eine Sicherheitsvorrichtung für ein Kraftfahrzeug mit einem aufblasbaren Airbag gelöst, der derart angepasst ist, dass er sich in einem aufgeblasenen Zustand zum Schutz einer aufprallenden Person über zumindest einen unteren Teil einer Außenseite einer Frontscheibe des Kraftfahrzeugs erstreckt. Ferner hat die Sicherheitsvorrichtung einen Gasgenerator zum Aufblasen des Airbags, wobei der Airbag eine erste Kammer und eine zweite Kammer aufweist. Dabei sind die erste Kammer und die zweite Kammer derart angeordnet, dass eine kleine Person, d.h. eine vergleichsweise kleinere Person, mit hoher Wahrscheinlichkeit bei einer bestimmten Fahrzeuggeschwindigkeit oder in einem bestimmten Fahrzeuggeschwindigkeitsbereich auf die erste Kammer treffen würde und eine große Person, d.h. eine vergleichsweise größere Person, mit hoher Wahrscheinlichkeit bei der bestimmten Fahrzeuggeschwindigkeit oder in dem bestimmten Fahrzeuggeschwindigkeitsbereich auf die zweite Kammer treffen würde.

Die Merkmale des zweiten Aspekts der vorliegenden Erfindung liegen wie vorstehend in Bezug auf den ersten Aspekt erläutert ist, die Überlegung zugrunde, dass eine kleinere Person bei einer Frontalkollision mit dem Kraftfahrzeug sich bei der Frontalkollision anders verhält als eine größere Person. Insbesondere haben die Erfinder festgestellt, dass eine kleine Person weniger hoch und weniger weit fliegt, während eine größere Person bei der Frontalkollision höher und weiter fliegt. Insbesondere konnte dabei über Modelle ermittelt werden, dass auch bedingt durch eine schräge Stellung der Frontscheibe bei nahezu allen Personenkraftfahrzeugen mit Frontklappe eine kleine Person mit großer Wahrscheinlichkeit auf einen unteren Bereich der Frontscheibe treffen würde und das zu einem ersten Zeitpunkt oder in einem ersten Zeitintervall, während eine große Person weiter oben und weiter hinten auf der Frontscheibe landen würde und das zu einem zweiten Zeitpunkt oder Zeitintervall. Dabei legt der erste Zeitpunkt bzw. das erste Zeitintervall vor dem zweiten Zeitpunkt bzw. vor dem zweiten Zeitintervall. Damit ist es auch sinnvoll, dass die erste Kammer und die zweite Kammer zu den entsprechend unterschiedlichen Zeiten vollständig gefüllt sind, weil eine Wirksamkeit des Airbags am größten ist, wenn beim Auftreffen je nach größer der Person, die jeweilige Kammer bereits vollständig gefüllt ist. Die jeweilige Kammer sollte bei dem jeweiligen Aufprall den optimalen Druck aufweisen. Der Auftreffzeitpunkt der jeweiligen Person wird zusätzlich durch die Fahrzeuggeschwindigkeit beeinflusst.

Demnach kann gemäß der vorliegenden Erfindung vorteilhaft die erste Kammer hinsichtlich eines Schutzes der kleinen Person ausgebildet sein und kann die zweite Kammer vorteilhaft hinsichtlich des Schutzes der großen Person ausgebildet sein.

Die Sicherheitsvorrichtung gemäß den vorstehenden zwei beschriebenen Aspekten der Erfindung sind dabei derart ausgebildet, dass zwischen der ersten Kammer und der zweiten Kammer eine strömungsmechanische Verbindung, d.h. eine Verbindung, durch die Gas strömen kann, ausgebildet ist.

Die Sicherheitsvorrichtung gemäß den vorstehenden zwei beschriebenen Aspekten der Erfindung mit der strömungsmechanischen Verbindung kann dabei insbesondere derart ausgebildet sein, dass die erste Kammer zu einem erwarteten ersten Zeitpunkt oder einem erwarteten ersten Zeitintervall, zu dem eine kleine Person auf den Airbag treffen würde, vollständig gefüllt ist und die zweite Kammer über die strömungsmechanische Verbindung zu einem erwarteten späten zweiten Zeitpunkt oder einem erwarteten späten zweiten Zeitintervall, zu dem eine große Person auf den Airbag treffen würde, vollständig gefüllt ist.

Gemäß einer bevorzugten Weiterbildung der Sicherheitsvorrichtung gemäß den Aspekten der vorliegenden Erfindung ist diese derart ausgebildet, dass im Falle einer Kollision mit einer kleineren Person bei einem Auftreffen der kleinen Person auf die erste Kammer in der ersten Kammer befindliches Gas über die strömungsmechanische Verbindung in die zweite Kammer entweichen kann.

Ein Entweichen von Gas bei einem Auftreffen einer Person auf den Frontscheibenairbag ist notwendig, um einen sogenannten Rückpralleffekt der Person zu verhindern. Gemäß der vorliegenden Erfindung wird hier das Gas, das sich in der vollständig aufgeblasenen ersten Kammer befindet, nicht in die Umgebung abgelassen, sondern es wird die strömungsmechanische Verbindung als Gasauslassventil der ersten Kammer genutzt, wobei das in der ersten Kammer befindliche Gas in die zweite Kammer entweichen kann. Es ist also zu dem frühen Zeitpunkt des Auftreffens der Person auf die erste Kammer keine Ansteuerung eines Gasauslassventils zum Auslassen von Gas in die Umgebung notwendig.

Gemäß einer bevorzugten Weiterbildung der Sicherheitsvorrichtung gemäß der vorliegenden Erfindung kann diese derart ausgebildet sein, dass im Falle einer Kollision mit einer großen Person bei einem Auftreffen der großen Person auf die zweite Kammer in der zweiten Kammer befindliches Gas über die strömungsmechanische Verbindung in die erste Kammer entweichen kann und Gas von der ersten Kammer in die Umgebung entweichen kann.

Damit wird die strömungsmechanische Verbindung zu einem Gasauslass der zweiten Kammer, wobei das Gas dann über die erste Kammer in die Umgebung abgegeben werden kann. Somit wird auch bei dem Aufprall einer großen Person auf die zweite Kammer eine Rückprallwirkung vermieden.

Gemäß den vorstehend beschriebenen Merkmalen ist somit der Airbag geeignet an das Auftreffen einer kleinen Person als wie an das Auftreffen einer großen Person auf den Airbag angepasst.

Gemäß einer bevorzugten Weiterbildung der vorliegende Erfindung ist bei der Sicherheitsvorrichtung die erste Kammer im aufgeblasenen Zustand direkt an die Frontscheibe angrenzend ausgebildet. Ebenso kann die zweite Kammer im aufgeblasenen Zustand direkt an die Frontscheibe angrenzend ausgebildet sein. Direkt an die Frontscheibe angrenzend bedeutet, dass die Kammer an der Frontscheibe anliegt oder zumindest in Anlage kommt, wenn eine Person auf die jeweilige Kammer trifft.

Gemäß einer bevorzugten Weiterbildung der Sicherheitsvorrichtung gemäß der vorliegende Erfindung ist der Gasgenerator nur mit der ersten Kammer verbunden und ist derart ausgebildet, dass er beim Aufblasen des Airbags Gas direkt in die erste Kammer bläst. Mit anderen Worten ist der Gasgenerator bevorzugt nicht mit der zweiten Kammer verbunden sondern lediglich mit der ersten und bläst das Gas direkt in die erste Kammer ein, wobei die zweite Kammer lediglich indirekt über die erste Kammer befüllbar ist. Bei der Sicherheitsvorrichtung gemäß der vorliegenden Erfindung sind die erste Kammer und die zweite Kammer durch eine Trennwand voneinander getrennt.

Hierdurch ist ein besonders einfacher Aufbau des Airbags mit zwei Kammern möglich, die hierdurch direkt aneinander angrenzen können und wobei kein Zwischenraum zwischen der ersten Kammer und der zweiten Kammer ausgebildet ist.

Bevorzugt sind die erste Kammer und die zweite Kammer durch eine einzige Trennwand voneinander getrennt, was den Aufbau und die Herstellung des Airbags weiter vereinfacht.

Bei der erfindungsgemäßen Sicherheitsvorrichtung mit der Trennwand und der strömungsmechanischen Verbindung ist die strömungsmechanische Verbindung in einem Randbereich zwischen der Trennwand und einer Airbagaußenwand, d.h. einer Airbaghülle, ausgebildet. Vorteilhaft ist dabei die strömungsmechanische Verbindung in einem linken Randbereich und/oder einem rechten Randbereich der Trennwand bzw. des Airbags ausgebildet.

Hierdurch wird eine schnelle Entfaltung des Airbags über die erste Kammer begünstigt. Insbesondere wird hierdurch begünstigt, dass die erste Kammer möglichst weit aufgeblasen wird, bevor über die strömungsmechanische Verbindung Gas in die zweite Kammer eintritt. Hierdurch kann besonders dem Umstand begegnet werden, dass eine kleine Person zu einem früheren Zeitpunkt auf die erste Kammer trifft, während eine große Person zu einem späteren Zeitpunkt auf die zweite Kammer trifft.

Ferner erstreckt sich bei der Sicherheitsvorrichtung gemäß der vorliegenden Erfindung die erste Kammer bevorzugt über eine gesamte Breite der Frontscheibe und ebenso erstreckt sich die zweite Kammer über eine gesamte Breite der Frontscheibe. Zusätzüch kann/können sich erste Kammer und/oder die zweite Kammer jeweils über eine linke und eine rechte A-Säule erstrecken.

Gemäß einer weiteren bevorzugten Weiterbildung der Sicherheitsvorrichtung der vorliegenden Erfindung weist die erste Kammer einen ersten Gasauslass zum Auslassen von Gas aus dem aufgeblasenen Airbag in die Umgebung auf, wobei insbesondere ein erstes ansteuerbares Gasauslassventil in dem ersten Gasauslass angeordnet ist.

Hierdurch ist es möglich eine Rückprallwirkung bei einem Aufprall einer Person auf den Airbag durch Auslassen von Gas aus dem Airbag in die Umgebung zu ermöglichen.

Ferner ist es möglich, dass die erste Kammer einen zweiten Gasauslass zum Auslassen von Gas aus dem aufgeblasenen Airbag in die Umgebung aufweist, wobei vorteilhaft ein zweites ansteuerbares Gasauslassventil in dem zweiten Gasauslass angeordnet ist.

Damit können je nach Anforderung verschiedene Gasauslassszenarien verwirklicht werden.

In dem Fall, in dem ein erstes Gasauslassventil und ein zweites Gasauslassventil vorgesehen sind, ist das zweite Gasauslassventil bevorzugt größer als das erste Gasauslassventil. Mit anderen Worten kann bevorzugt durch das zweite Gasauslassventil eine größere Menge an Gas strömen als durch das erste Gasauslassventil.

Hierdurch ist es besonders einfach eine gewünschte Gasauslassmenge je nach Situation bereit zu stellen.

Bevorzugt wird bei der erfindungsgemäßen Sicherheitsvorrichtung mit einem ersten Gasauslassventil und einem zweiten Gasauslassventil das erste Gasauslassventil zuerst geöffnet und danach erst das zweite Gasauslassventil geöffnet. Insbesondere kann das zweite Gasauslassventil in diesem Fall derart dimensioniert und angesteuert sein, dass es sehr schnell eine vollständige Entleerung des Airbags zu einem Zeitpunkt ermöglicht, zu dem keine Schutzwirkung des Airbags mehr erforderlich ist. Dies ist dann von Vorteil, wenn der Airbag durch eine Rückholeinrichtung aus einem Sichtfeld eines Fahrzeugfahrers gezogen werden soll. Das kleine erste Gasauslassventil dient damit einer Verminderung einer Rückprallwirkung, während das größere zweite Gasauslassventil zum Zwecke einer möglichst schnellen vollständigen Entleerung ausgebildet ist.

Alternativ können das erste Gasauslassventil und das zweite Gasauslassventil gleichzeitig geöffnet werden.

Gemäß einer bevorzugten Weiterbildung können das erste Gasauslassventil und das zweite Gasauslassventil die gleiche Größe aufweisen und insbesondere symmetrisch in einem linken Bereich bzw. einem rechten Bereich der ersten Kammer angeschlossen sein. Bei einem gleichzeitigen Öffnen des ersten Gasauslassventils und des zweiten Gasauslassventils kann damit eine gleichförmige, symmetrische Entleerung der ersten Kammer bzw. der zweiten Kammer über die erste Kammer erfolgen.

Bei der Sicherheitsvorrichtung gemäß der vorliegenden Erfindung mit einem ansteuerbaren Gasauslassventil ist die Sicherheitsvorrichtung insbesondere derart ausgebildet, dass zumindest das erste ansteuerbare Gasauslassventil zu einem Zeitpunkt geöffnet wird, bei dem ein Auftreffen einer großen Person auf die zweite Kammer erwartet wird.

Damit kann beim Auftreffen der großen Person und bei dem vollständig aufgeblasenen Airbag, d.h. der vollständig gefüllten ersten Kammer und der vollständig gefüllten zweiten Kammer, der Rückpralleffekt besser vermieden werden.

Bevorzugt ist bei der Sicherheitsvorrichtung gemäß der vorliegenden Erfindung die zweite Kammer ausschließlich über die strömungsmechanische Verbindung entleerbar. Mit anderen Worten ist die strömungsmechanische Verbindung der einzige Gasauslass der zweiten Kammer. Dies soll jedoch nicht ausschließen, dass über Nähte oder andere Undichtigkeiten des Airbags auch an anderer Stelle geringe Mengen an Gas aus der zweiten Kammer entweichen können. Alternativ oder zusätzlich ist die zweite Kammer ausschließlich über die strömungsmechanische Verbindung mit Gas befüllbar. Damit wird die zweite Kammer nur über die erste Kammer befüllt, wodurch auf eine einfache Weise sicher gestellt ist, dass die zweite Kammer zu einem späteren Zeitpunkt vollständig gefüllt ist als die erste Kammer.

Gemäß einer weiteren bevorzugten Weiterbildung der Sicherheitsvorrichtung ist ein maximales Volumen der ersten Kammer größer als ein maximales Volumen der zweiten Kammer.

Dies ist insbesondere dahingehend vorteilhaft, dass bei einem zu kleinen Volumen der ersten Kammer, in die das Gas von dem Gasgenerator direkt eingeblasen wird, sich möglicherweise in zu hoher Druck einstellen würde und dadurch die erste Kammer durch den Druck zu stark beansprucht wäre.

Insbesondere kann ein Verhältnis des maximalen Volumens der ersten Kammer zu dem maximalen Volumen der zweiten Kammer in einem Bereich von 65:35 bis 85:15 liegen. Bevorzugt kann sich der Bereich von 70:30 bis 80:20 erstrecken.

Die vorliegende Erfindung ermöglicht es, mit einem einfachen Aufbau, dem unterschiedlichen Kollisionsverhalten von unterschiedlich großen Personen zu begegnen, wobei festgestellt wurde, dass das vorstehende Zweikammersystem hierfür für ausreichend ist, den vielen unterschiedlichen Größen von Personen gerecht zu werden.

Gemäß einer Weiterbildung ist es aber auch möglich, dass der Airbag eine dritte Kammer aufweist, die an die zweite Kammer angrenzt und mit der zweiten Kammer über eine strömungsmechanische Verbindung und eine Trennwand verbunden ist. Dabei kann sich die dritte Kammer ebenso über eine gesamte Breite der Frontscheibe erstrecken. Ferner kann die dritte Kammer nur über die zweite Kammer entleerbar ausgebildet sein. Hierdurch ist der Airbag mit drei Zonen ausgebildet, die eine noch bessere Anpassung an die Kollision mit unterschiedlich großen Personen ermöglicht.

Vorstehend aufgeführte Weiterbildungen und Merkmale der Erfindung können geeignet, soweit möglich, miteinander kombiniert werden. Insbesondere betreffen die angeführten Weiterbildung sowohl den ersten Aspekt der Erfindung als auch den zweiten Aspekt der Erfindung.

Nachstehend folgt eine Kurzbeschreibung der Figuren.
- Fig. 1: zeigt eine schematische Seitenansicht eines Frontscheibenairbags an einem Kraftfahrzeug gemäß einem Ausführungsbeispiel der vorliegenden Erfindung.
- Fig. 2: zeigt eine schematische Schnittansicht eines Frontscheibenairbags gemäß dem Ausführungsbeispiel der Erfindung quer zu einer Frontscheibe.
- Fig. 3: zeigt eine schematische, geschnittene Draufsicht des Frontscheibenairbags gemäß dem Ausführungsbeispiel der vorliegenden Erfindung parallel zu der Frontscheibe.

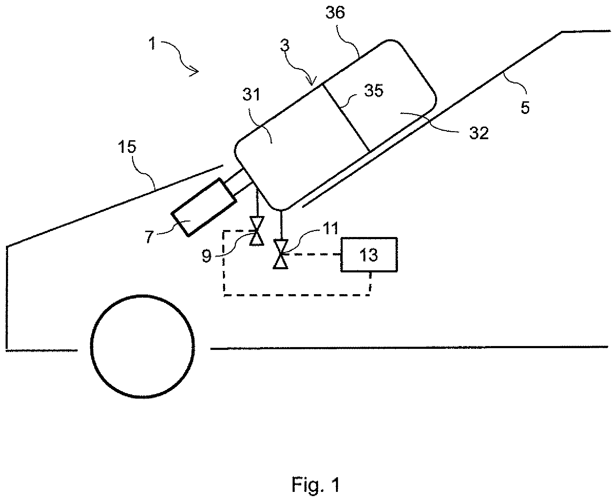

Nachstehend ist ein Ausführungsbeispiel unter Bezugnahme auf die Figuren 1 bis 3 beschrieben.

In Figur 1 ist eine Sicherheitsvorrichtung 1 an einem Kraftfahrzeug gemäß dem Ausführungsbeispiel der vorliegenden Erfindung schematisch gezeigt.

Die Sicherheitsvorrichtung weist einen Frontscheibenairbag 3 auf, der sich im dargestellten aufgeblasenen Zustand über einen unteren Bereich einer Frontscheibe 5 des Kraftfahrzeugs erstreckt und mittels eines Gasgenerators 7 aufgeblasen wurde. Der Frontscheibenairbag 3 weist eine erste Kammer 31 und eine zweite Kammer 32 auf, die durch eine Trennwand 35 voneinander getrennt sind. Die erste Kammer 31 ist im Wesentlichen parallel zu der Frontscheibe 5 ausgebildet und grenzt an ein unteres Ende der Frontscheibe 5 an. Die zweite Kammer 32 ist ebenso parallel zu der Frontscheibe 5 ausgebildet, und befindet sich in dem aufgeblasenen Zustand an einer von dem unteren Ende der Frontscheibe entfernten Position und grenzt durch die Trennwand 35 getrennt direkt an die erste Kammer 31 an. Eine Airbagaussenwand bzw. eine Airbaghülle ist mit dem Bezugszeichen 36 versehen. Der Gasgenerator 7 befindet sich unterhalb eines hinteren Endes einer Frontklappe 15. Die Frontklappe 15 ist in dem dargestellten Zustand angehoben, so dass der Frontscheibenairbag 3 aus einem Spalt zwischen der Frontklappe 15 und der Frontscheibe 5 bzw. einem Windlauf entfaltet werden konnte. Der Frontscheibenairbag 3 erstreckt sich über eine gesamte Breite der Frontscheibe 5 bis über eine linke und eine rechte A-Säule. Dementsprechend erstrecken sich auch die erste Kammer 31 und die zweite Kammer 32 über eine gesamte Breite der Frontscheibe 5 bis über die linke und die rechte A-Säule. In Figur 1 ist ferner ein erstes ansteuerbares Gasauslassventil 9 sowie ein zweites ansteuerbares Gasauslassventil 11 gezeigt, die mit der ersten Kammer 31 verbunden sind und über eine Steuereinrichtung 13 angesteuert werden.

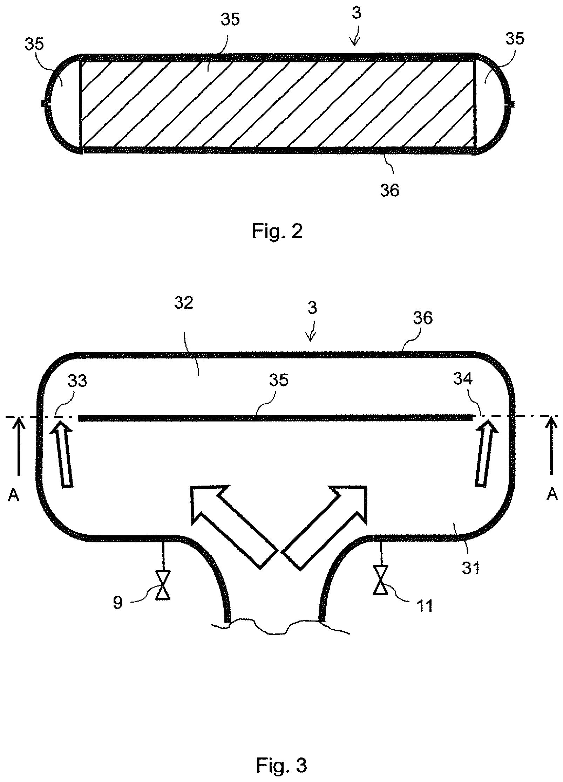

Figur 3 zeigt eine schematische, geschnittene Draufsicht auf den Frontscheibenairbag 3 parallel zu der Frontscheibe 5, welche in Figur 3 nicht gezeigt ist. Insbesondere ist in Figur 3 ebenso die erste Kammer 31 und die zweite Kammer 32 gezeigt, wobei die erste Kammer 31 größer ist als die zweite Kammer 32. Insbesondere beträgt das Volumen der ersten Kammer 31 ungefähr 70 bis 80% des Gesamtvolumens des Frontscheibenairbags 3. Demnach weist die zweite Kammer 32 lediglich ein Volumen von 30 bis 20% des Gesamtvolumens des Frontscheibenairbags 3 auf.

Figur 2 ist eine Schnittansicht in Richtung der Pfeile A-A in Figur 3 durch den Frontscheibenairbag 3 entlang einer Querrichtung zur Frontscheibe 5 und senkrecht zur Frontscheibe 5. Hierbei ist zu erkennen, dass die Trennwand 35 oben und unten mit der Airbaghülle 36 fest verbunden, z.B. vernäht oder verklebt, ist, während die Trennwand 35 an ihrem linken Ende und an ihrem rechten Ende nicht mit der Airbaghülle 36 verbunden ist. Insbesondere entsteht dadurch ein gasdurchlässiger Spalt links und rechts der Trennwand 35 zwischen der Airbaghülle 36 und der Trennwand 35. Der linke und der rechte Spalt bilden eine linke strömungsmechanische Verbindung 33 und eine rechte strömungsmechanische Verbindung 34, durch die Gas von der ersten Kammer 31 in die zweite Kammer 32 und umgekehrt strömen kann.

Alternativ kann die strömungsmechanische Verbindung selbstverständlich auch ein in der Trennwand 35 ausgebildeter Durchgang sein und es können mehr strömungsmechanische Verbindungen oder weniger strömungsmechanische Verbindungen an geeigneten Stellen zwischen der ersten Kammer und der zweite Kammer ausgebildet sein. Ferner kann die strömungsmechanische Verbindung hinsichtlich einer gewünschten Gasströmung von der ersten in die zweite Kammer als auch von der zweiten in die erste Kammer geeignet dimensioniert sein und/oder mit strömungsbeschränkenden Einrichtungen versehen sein.

Nachstehend ist eine Funktion der Sicherheitseinrichtung 1 beschrieben.

Im Falle einer Erfassung einer Kollision oder einer bevorstehenden Kollision des Kraftfahrzeugs mit einer Person, z.B. mit einem Fußgänger oder einem Fahrradfahrer, erzeugt die Steuerung 13 ein Aktivierungssignal, das den Gasgenerator 7 aktiviert. Dabei wird Gas aus dem Gasgenerator 7 freigesetzt und direkt in die erste Kammer 31 geblasen. Dabei entfaltet sich der Airbag 3 zunächst über die erste Kammer 31 über eine gesamte Breite der Frontscheibe bis das einströmende Gas über die strömungsmechanischen Verbindungen 33 und 34 in die zweite Kammer 32 eindringt.

In diesem Zusammenhang sei erläutert, dass die erste Kammer 31 insbesondere deswegen größer als die zweite Kammer 32 ausgeführt ist, da das Gas zunächst lediglich in die erste Kammer 31 eingeblasen wird und dadurch ein schneller Druckanstieg in der ersten Kammer 31 erfolgen kann. Der Druckanstieg fällt dabei etwas geringer aus, wenn die erste Kammer 31 größer ist. Im Verlauf der Zeit wird also die erste Kammer 31 vollständig aufgeblasen, wobei währenddessen schon kontinuierlich Gas in die zweite Kammer 32 überströmt, bis auch die zweite Kammer 32 vollständig aufgeblasen wird. Damit ist die erste Kammer 31 zu einem früheren Zeitpunkt aufgeblasen wie die zweite Kammer 32.

Die Einflußkriterien bei der Kollision mit dem Fußgänger sind insbesondere eine Fahrzeuggeschwindigkeit und eine Größe der Person, mit der das Kraftfahrzeug frontal zusammenstößt. Dabei konnte ermittelt werden, dass eine große Person weiter oben an der Frontscheibe auftrifft als eine kleine Person. Des Weiteren ist der Auftreffpunkt auch abhängig von der Geschwindigkeit. Bei einer großen Geschwindigkeit trifft die jeweilige Person tendenziell weiter oben auf wie bei einer kleinen Geschwindigkeit. Typische Geschwindigkeiten bei denen ein Frontscheibenairbag seine Schutzwirkung erzielen kann liegen im Bereich von 20 km/h bis ungefähr 50 km/h. Ferner hat die Größe der Person und die Geschwindigkeit des Kraftfahrzeugs einen Einfluss darauf, zu welchem Zeitpunkt die Person auf den Frontscheibenairbag 3 trifft. Tendenziell trifft eine kleinere Person eher in einem unteren Bereich auf, während eine größere Person eher in einem oberen Bereich auftrifft. Dabei ist die erste Kammer 31 derart angeordnet, dass hier bevorzugt kleine Personen auftreffen und die zweite Kammer 32 ist derart angeordnet, dass hier bevorzugt größere Personen auftreffen. Da die kleinere Person weiter unten auftrifft und demnach weniger weit fliegt, ist der Auftreffzeitpunkt/-zeitraum der kleinen Person früher als der Auftreffzeitpunkt/- zeitraum der größeren Person. Dabei haben die Erfinder gefunden, dass es vorteilhaft ist, dass die erste Kammer 31 früher aufgeblasen ist als die zweite Kammer 32. Dies wird dadurch gelöst, dass der Gasgenerator 7 das Gas nur in die erste Kammer 31 einbläst, und das Gas dann erst an seitlichen Enden des Frontscheibenairbags 3 in die zweite Kammer 32 überströmen kann. Die erste Kammer 31 ist also früher aufgeblasen als die zweite Kammer 32. Damit kann die Aktivierung des Gasgenerators zu einem späteren Zeitpunkt erfolgen, da bei einem Auftreffen der kleinen Person zu dem frühen Zeitpunkt nicht der gesamte Airbag 3 aufgeblasen sein muss, sondern lediglich die erste Kammer 31.

Erfolgt nun eine Kollision mit der kleinen Person, wobei das System nicht zwingend erkennen muss, ob es sich um eine kleine oder große Person handelt, trifft nun die kleine Person zu einem verhältnismäßig frühen Zeitpunkt auf einen unteren Bereich des Airbags 3, nämlich auf die erste Kammer 31. Da die kleine Person zu einem verhältnismäßig frühen Zeitpunkt auftrifft, aber die erste Kammer 31 schon vollständig aufgeblasen ist, kann der Frontscheibenairbag 3 für die kleine Person zu dem frühen Zeitpunkt bereits seine volle Schutzwirkung, weil die erste Kammer 31 den vollen Druck aufweist, für die Person entfalten. Trifft nun die kleine Person auf die erste Kammer 31 auf, ist die zweite Kammer 32 jedoch noch nicht vollständig gefüllt. Somit kann bei dem Auftreffen der kleinen Person die damit einhergehende Druckerhöhung über die strömungsmechanischen Verbindungen 33 und 34 abgebaut werden. Mit anderen Worten wird die erste Kammer 31 über die strömungsmechanischen Verbindungen 33, 34 in die zweite Kammer 32 entlüftet. Hierbei wird eine unerwünschte Rückprallwirkung der Person vermieden.

Handelt es sich bei der Kollision jedoch um eine Kollision mit einer großen Person, so trifft diese zu einem verhältnismäßig späten Zeitpunkt und weiter oben auf den Frontscheibenairbag 3 auf. Zu dem verhältnismäßig späten Zeitpunkt ist die erste Kammer 31 bereits vollständig aufgeblasen und ebenso die zweite Kammer 32. Damit kann der Frontscheibenairbag 3 seine Schutzwirkung auch in einem oberen Bereich des Frontscheibenairbags 3 entfalten. Um zu dem späten Zeitpunkt die unerwünschte Rückprallwirkung des Frontscheibenairbags 3, der nunmehr vollständig aufgeblasen ist, zu verhindern, wird nunmehr der Frontscheibenairbag 3 entlüftet. Dies erfolgt über das angesteuerte Gasauslassventil 9. D.h., wenn die große Person auf die zweite Kammer 32 auftrifft, kann durch die dann geöffnete Gasauslassventil 9 Gas von der zweiten Kammer zurück in die erste Kammer über die strömungsmechanischen Verbindungen 33 und 34 strömen. Des Weiteren kann das Gas aus der ersten Kammer 31 in die Umgebung entweichen. Zu einem späten Zeitpunkt, bei dem davon ausgegangen wird, dass keine Schutzwirkung des Airbags 3 mehr erforderlich ist, wird das Gasauslassventil 11 zum schnellen, vollständigen Entleeren des Airbags geöffnet. Hierfür ist das Gasauslassventil 11 größer dimensioniert als das Gasauslassventil 9. Nach der vollständigen Entlüftung des Airbags 3 kann dieser dann durch eine nicht gezeigte Rückholeinrichtung aus einem Sichtbereich eines Fahrers des Kraftfahrzeugs gezogen werden.

Somit kann die Sicherheitsvorrichtung ihre Schutzwirkung bei unterschiedlich großen Personen, sowohl bei kleinen Personen als auch bei großen Personen, in unterschiedlichen Geschwindigkeitsbereichen geeignet entfalten, ohne dass es erforderlich ist, dass die Sicherheitsvorrichtung weiß, ob eine kleine Person auftrifft oder eine große Person auftrifft.

Insgesamt ist durch die erfindungsgemäße Lösung ein späteres Aktivieren der Sicherheitsvorrichtung 1, insbesondere des Gasgenerators 7, mit den bereits vorstehend beschriebenen Vorteilen möglich.

## Patentansprüche

1. Sicherheitsvorrichtung (1) für eine Kraftfahrzeug mit einem aufblasbaren Airbag (3), der derart angepasst ist, dass er sich in einem aufgeblasenen Zustand zum Schutz einer aufprallenden Person über zumindest einen unteren Teil einer Außenseite einer Frontscheibe (5) des Kraftfahrzeugs erstreckt, einem Gasgenerator (7) zum Aufblasen des Airbags (3), wobei der Airbag (3) eine erste Kammer (31) und eine zweite Kammer (32) aufweist, und die erste Kammer (31) im aufgeblasenen Zustand benachbart zu einem unteren Ende der Frontscheibe (5) angeordnet ist und die zweite Kammer (32) im aufgeblasenen Zustand entfernt von dem unteren Ende der Frontscheibe (5) angeordnet ist, wobei sich die erste Kammer (31) und die zweite Kammer (32) über eine gesamte Breite der Frontscheibe (5) erstrecken, und wobei beim Aufblasen des Airbags die erste Kammer (31) zu einem früheren Zeitpunkt als die zweite Kammer (32) vollständig befüllbar ist,
**dadurch gekennzeichnet, dass**
zwischen der ersten Kammer (31) und der zweiten Kammer (32) eine strömungsmechanische Verbindung (33, 34) ausgebildet ist, wobei die erste Kammer (31) und die zweite Kammer (32) durch eine Trennwand voneinander getrennt sind, und wobei die strömungsmechanische Verbindung (33, 34) in einem Randbereich zwischen der Trennwand (35) und der Airbaghülle (36) ausgebildet ist.

2. Sicherheitsvorrichtung nach Patentanspruch 1, wobei die erste Kammer (31) und die zweite Kammer (32) derart angeordnet sind, dass eine kleine Person mit hoher Wahrscheinlichkeit auf die erste Kammer (31) treffen würde und eine große Person mit hoher Wahrscheinlichkeit auf die zweite Kammer (32) treffen würde.

3. Sicherheitsvorrichtung nach Patentanspruch 2, wobei die Sicherheitsvorrichtung derart ausgebildet ist, dass die erste Kammer (31) zu einem erwarteten ersten Zeitpunkt, zu dem eine kleine Person auf den Airbag (3) treffen würde, vollständig gefüllt ist und dass die zweite Kammer (32) über die strömungsmechanische Verbindung (33, 34) zu einem erwarteten zweiten Zeitpunkt, der nach dem ersten Zeitpunkt liegt und zu dem eine große Person auf den Airbag (3) treffen würde, vollständig gefüllt ist.

4. Sicherheitsvorrichtung nach Patentanspruch 3, wobei die Sicherheitsvorrichtung (1) derart ausgebildet ist, dass im Falle einer Kollision des Kraftfahrzeugs mit einer kleinen Person bei einem Auftreffen der kleinen Person auf die erste Kammer (31) in der ersten Kammer (31) befindliches Gas über die strömungsmechanische Verbindung (33, 34) in die zweite Kammer (32) entweichen kann.

5. Sicherheitsvorrichtung nach einem der Patentansprüche 3 oder 4, wobei die Sicherheitsvorrichtung (1) derart ausgebildet ist, dass im Falle einer Kollision des Kraftfahrzeugs mit einer großen Person bei einem Auftreffen der großen Person auf die zweite Kammer (32) in der zweiten Kammer (32) befindliches Gas über die strömungsmechanische Verbindung (33, 34) in die erste Kammer (31) entweichen kann und Gas von der ersten Kammer (31) in die Umgebung entweichen kann.

6. Sicherheitsvorrichtung nach einem der Patentansprüche 1 bis 5, wobei die erste Kammer (31) im aufgeblasenen Zustand direkt an die Frontscheibe (5) angrenzend ausgebildet ist und/oder wobei die zweite Kammer (32) im aufgeblasenen Zustand direkt an die Frontscheibe (5) angrenzend ausgebildet ist.

7. Sicherheitsvorrichtung nach einem der Patentansprüche 3 bis 6, wobei der Gasgenerator (7) nur mit der ersten Kammer (31) verbunden ist und derart ausgebildet ist, dass er beim Aufblasen des Airbags (3) Gas direkt in die erste Kammer (31) bläst.

8. Sicherheitsvorrichtung nach einem der Patentansprüche 3 bis 7, wobei die erste Kammer (31) und die zweite Kammer (32) durch eine einzige Trennwand, voneinander getrennt sind.

9. Sicherheitsvorrichtung nach einem der Patentansprüche 1 bis 8, wobei die strömungsmechanische Verbindung (33, 34) in einem linken Randbereich und/oder einem rechten Randbereich zwischen der Trennwand (35) und der Airbaghülle (36) ausgebildet ist.

10. Sicherheitsvorrichtung nach einem der Patentansprüche 1 bis 8, wobei die erste Kammer (31) einen ersten Gasauslass zum Auslasses von Gas aus dem aufgeblasenen Airbag (3) in die Umgebung aufweist, wobei insbesondere ein erstes ansteuerbares Gasauslassventil (9) in dem ersten Gasauslass angeordnet ist, wobei zusätzlich die erste Kammer (31) einen zweiten Gasauslass zum Auslassen von Gas aus dem aufgeblasenen Airbag (3) in die Umgebung aufweisen kann, wobei insbesondere ein zweites ansteuerbares Gasauslassventil (11) in dem zweiten Gasauslass angeordnet ist.

11. Sicherheitsvorrichtung nach Patentanspruch 10, wobei durch das zweites Gasauslassventil (11) eine größere Menge an Gas als durch das erste Gasauslassventil (9) strömen kann.

12. Sicherheitsvorrichtung nach Patentanspruch 10 oder 11, wobei die Sicherheitsvorrichtung (1) derart ausgebildet ist, dass nach einem Aufblasen des Airbags (3) und nach einem Öffnen des ersten ansteuerbare Gasauslassventils (9) das zweite ansteuerbare Gasauslassventil (11) geöffnet wird, oder dass die Sicherheitsvorrichtung (1) derart ausgebildet ist, dass das erste Gasauslassventil (9) und das zweite Gasauslassventil (11) gleichzeitig geöffnet werden.

13. Sicherheitsvorrichtung nach einem der Patentansprüche 10 bis 12, wobei die Sicherheitsvorrichtung (1) derart ausgebildet ist, dass das erste ansteuerbare Gasauslassventil (9) zu einem Zeitpunkt geöffnet wird, bei dem ein Auftreffen einer großen Person auf zumindest die zweite Kammer (32) erwartet wird.

14. Sicherheitsvorrichtung nach einem der Patentansprüche 1 bis 12, wobei die zweite Kammer (32) ausschließlich über die strömungsmechanische Verbindung (33, 34) entleerbar ist und/oder wobei die zweite Kammer (32) ausschließlich über die strömungsmechanische Verbindung (33, 34) mit Gas befüllbar ist

15. Sicherheitsvorrichtung für ein Kraftfahrzeug nach einem der Patentansprüche 1 bis 14, wobei ein maximales Volumen der ersten Kammer (31) größer als ein maximales Volumen der zweiten Kammer (32) ist, wobei insbesondere ein Verhältnis des maximalen Volumens der ersten Kammer (31) zu dem maximalen Volumen der zweiten Kammer (32) in einem Bereich von 65 zu 35 bis 85 zu 15, bevorzugt in einem Bereich von 70 zu 30 bis 80 zu 20, liegen kann.

## Claims

1. A safety device (1) for a motor vehicle with an inflatable airbag (3) which is adapted in such a way that in an inflated state in order to protect a person colliding with the vehicle it extends over at least a lower part of an outer side of a windscreen (5) of the motor vehicle, with a gas generator (7) for inflating the airbag (3), wherein the airbag (3) has a first chamber (31) and a second chamber (32), and the first chamber (31) in the inflated state is arranged adjacent to a lower end of the windscreen (5), and the second chamber (32) in the inflated state is arranged spaced apart from the lower end of the windscreen (5), wherein the first chamber (31) and the second chamber (32) extend over an entire width of the windscreen (5), and wherein upon inflation of the airbag the first chamber (31) can be filled completely at an earlier time than the second chamber (32),
**characterised in that**
a fluidic connection (33, 34) is formed between the first chamber (31) and the second chamber (32), the first chamber (31) and the second chamber (32) being separated from each other by a partition, and the fluidic connection (33, 34) being formed in an edge region between the partition (35) and the airbag cover (36).

2. A safety device according to Claim 1, wherein the first chamber (31) and the second chamber (32) are arranged in such a way that a small person would with high probability strike the first chamber (31) and a large person would with high probability strike the second chamber (32).

3. A safety device according to Claim 2, wherein the safety device is formed in such a way that the first chamber (31) is completely filled at an expected first time at which a small person would strike the airbag (3) and that the second chamber (32) via the fluidic connection (33, 34) is completely filled at an expected second time which lies after the first time and at which a large person would strike the airbag (3).

4. A safety device according to Claim 3, wherein the safety device (1) is formed in such a way that, in the event of the motor vehicle colliding with a small person, upon the small person striking the first chamber (31) gas which is in the first chamber (31) can escape into the second chamber (32) via the fluidic connection (33, 34).

5. A safety device according to one of Claims 3 or 4, wherein the safety device (1) is formed in such a way that, in the event of the motor vehicle colliding with a large person, upon the large person striking the second chamber (32) gas which is in the second chamber (32) can escape into the first chamber (31) via the fluidic connection (33, 34) and gas can escape from the first chamber (31) into the environment.

6. A safety device according to one of Claims 1 to 5, wherein the first chamber (31) in the inflated state is formed directly adjoining the windscreen (5) and/or wherein the second chamber (32) in the inflated state is formed directly adjoining the windscreen (5).

7. A safety device according to one of Claims 3 to 6, wherein the gas generator (7) is connected only to the first chamber (31) and is formed in such a way that upon inflation of the airbag (3) gas blows directly into the first chamber (31).

8. A safety device according to one of Claims 3 to 7, wherein the first chamber (31) and the second chamber (32) are separated from each other by a single partition.

9. A safety device according to one of Claims 1 to 8, wherein the fluidic connection (33, 34) is formed in a left-hand edge region and/or a righthand edge region between the partition (35) and the airbag cover (36).

10. A safety device according to one of Claims 1 to 8, wherein the first chamber (31) has a first gas outlet for letting gas out of the inflated airbag (3) into the environment, wherein especially a first controllable gas outlet valve (9) is arranged in the first gas outlet, wherein additionally the first chamber (31) may have a second gas outlet for letting gas out of the inflated airbag (3) into the environment, wherein in particular a second controllable gas outlet valve (11) is arranged in the second gas outlet.

11. A safety device according to Claim 10, wherein a larger amount of gas can flow through the second gas outlet valve (11) than through the first gas outlet valve (9).

12. A safety device according to Claim 10 or Claim 11, wherein the safety device (1) is formed in such a way that once the airbag (3) has been inflated and once the first controllable gas outlet valve (9) has been opened the second controllable gas outlet valve (11) is opened, or that the safety device (1) is formed in such a way that the first gas outlet valve (9) and the second gas outlet valve (11) are opened simultaneously.

13. A safety device according to one of Claims 10 to 12, wherein the safety device (1) is formed in such a way that the first controllable gas outlet valve (9) is opened at a time at which a large person is expected to strike at least the second chamber (32).

14. A safety device according to one of Claims 1 to 12, wherein the second chamber (32) can be emptied exclusively via the fluidic connection (33, 34) and/or wherein the second chamber (32) can be filled with gas exclusively via the fluidic connection (33, 34).

15. A safety device for a motor vehicle according to one of Claims 1 to 14, wherein a maximum volume of the first chamber (31) is greater than a maximum volume of the second chamber (32), wherein especially a ratio of the maximum volume of the first chamber (31) to the maximum volume of the second chamber (32) may lie in a range from 65 to 35 to 85 to 15, preferably in a range from 70 to 30 to 80 to 20.

## Revendications

1. Dispositif de sécurité destiné à un véhicule automobile équipé d'un airbag (3) pouvant être gonflé qui est adapté de sorte que, à l'état gonflé, il s'étende sur au moins la partie inférieure de la face extérieure du pare-brise (5) du véhicule pour permettre de protéger une personne percutée, et un générateur de gaz (7) pour permettre de gonfler l'airbag (3), l'airbag (3) comprenant une première chambre (31) et une seconde chambre (32), et, à l'état gonflé, la première chambre (31) étant située au voisinage de l'extrémité inférieure du pare-brise (5), et, la seconde chambre (32) étant située à distance de l'extrémité inférieure du pare-brise (5), la première chambre (31) et la seconde chambre (32) s'étendant sur la totalité de la largeur du pare-brise (5), et, lors du gonflage de l'airbag, la première chambre (31) pouvant être totalement remplie avant la seconde chambre (32),
caractérisé en qu'
entre la première chambre (31) et la seconde chambre (32) est formée une liaison fluidique mécanique (33, 34), la première chambre (31) et la seconde chambre (32) étant séparées par une paroi de séparation, et la liaison fluidique mécanique (33, 34) étant formée dans la zone de bord entre la paroi de séparation (35) et l'enveloppe de l'airbag (36).

2. Dispositif de sécurité conforme à la revendication 1,
dans lequel la première chambre (31) et la seconde chambre (32) sont positionnées de sorte qu'une personne petite viendrait frapper la première chambre (31) avec une plus grande probabilité alors qu'une personne grande viendrait frapper avec une plus grande probabilité la seconde chambre (32).

3. Dispositif de sécurité conforme à la revendication 2,
réalisé de sorte que la première chambre (31) soit totalement remplie à un premier instant attendu auquel une personne petite viendrait frapper l'airbag (3), et, que la seconde chambre (32) soit totalement remplie par l'intermédiaire de la liaison fluidique mécanique (33, 34) à un second instant attendu postérieur au premier instant et auquel une personne grande viendrait frapper l'airbag (3).

4. Dispositif de sécurité conforme à la revendication 3,
réalisé de sorte que, dans le cas d'une collision du véhicule avec une personne petite, lors d'un choc de la personne petite sur la première chambre (31) du gaz se trouvant dans la seconde chambre (32), puisse s'échapper dans la seconde chambre (32) par l'intermédiaire de la liaison fluidique mécanique (33, 34).

5. Dispositif de sécurité conforme à l'une des revendications 3 et 4,
dans lequel le dispositif de sécurité (1) est réalisé de sorte que,
dans le cas d'une collision du véhicule avec une personne grande, lors du choc de la personne grande sur la seconde chambre (32), du gaz se trouvant dans la seconde chambre (32) puisse s'échapper dans la première chambre (31) par l'intermédiaire de la liaison fluidique mécanique (33, 34), et que du gaz puisse s'échapper de la première chambre (31) vers l'environnement.

6. Dispositif de sécurité conforme à l'une des revendications 1 à 5,
**caractérisé en ce qu'**
à l'état gonflé, la première chambre (31) est directement adjacente au pare-brise (5) et/ou, à l'état gonflé, la seconde chambre (32) est directement adjacente au pare-brise (5).

7. Dispositif de sécurité conforme à l'une des revendications 3 à 6,
dans lequel le générateur de gaz (7) n'est relié qu'à la première chambre (31) et est réalisé de façon à souffler du gaz directement dans la première chambre (31) lors du gonflage de l'airbag (3).

8. Dispositif de sécurité conforme à l'une des revendications 3 à 7,
dans lequel la première chambre (31) et la seconde chambre (32) sont séparées l'une de l'autre par une seule paroi de séparation.

9. Dispositif de sécurité conforme à l'une des revendications 1 à 8,
dans lequel la liaison fluidique mécanique (33, 34) est réalisée dans la zone du bord gauche et/ ou dans la zone du bord droit, entre la paroi de séparation (35) et l'enveloppe de l'airbag (36).

10. Dispositif de sécurité conforme à l'une des revendications 1 à 8,
dans lequel la première chambre (31) comporte une première sortie de gaz pour permettre l'échappement de gaz de l'airbag (3) gonflé dans l'atmosphère, en particulier une première soupape d'échappement de gaz commandable (9) est montée dans la première sortie de gaz, et la première chambre (31) peut en outre comporter une seconde sortie de gaz pour permettre l'échappement de gaz de l'airbag (3) gonflé dans l'atmosphère, et en particulier une seconde soupape d'échappement de gaz (11) commandables et montée dans la seconde sortie de gaz.

11. Dispositif de sécurité conforme à la revendication 10,
dans lequel une plus grande quantité de gaz peut circuler dans la seconde soupape d'échappement de gaz (11) que dans la première soupape d'échappement de gaz (9).

12. Dispositif de sécurité conforme à la revendication 10 ou 11,
réalisé de sorte qu'après le gonflage de l'airbag (3) et après l'ouverture de la première soupape d'échappement de gaz commandable (9), la seconde soupape d'échappement de gaz commandable (11) soit ouverte, ou est réalisée de sorte que la première soupape d'échappement de gaz (9) et la seconde soupape d'échappement de gaz (11) s'ouvrent simultanément.

13. Dispositif de sécurité conforme à l'une des revendications 10 à 12, réalisé de sorte que la première soupape d'échappement de gaz commandable (9) s'ouvre à un instant auquel un choc d'une personne grande avec au moins la seconde chambre (32) est attendu.

14. Dispositif de sécurité conforme à l'une des revendications 1 à 12, dans lequel la seconde chambre (32) ne peut être vidée que par la liaison fluidique mécanique (33, 34), et/ou la seconde chambre (32) ne peut être remplie de gaz que par la liaison fluidique, mécanique (33, 34).

15. Dispositif de sécurité destiné à un véhicule conforme à l'une des revendications 1 à 14,
dans lequel le volume maximum de la première chambre (31) est supérieur au volume maximum de la seconde chambre (32), et en particulier le rapport entre le volume maximum de la première chambre (31) et le volume maximum de la seconde chambre (32) peut être situé dans une plage de 65 à 35 à 85 à 15 et de préférence dans une plage de 70 à 30 à 80 à 20.
